# EUROPEAN PATENT SPECIFICATION

(11) **EP 4 498 501 B1**
(45) Date of publication and mention of the grant of the patent: **25.11.2026**
(21) Application number: 23900817.0
(22) Date of filing: 10.08.2023
(51) Int. Cl.: H01M 50/503, H01M 50/533, H01M 50/211, H01M 50/105

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 05.12.2022 KR 20220167843
(43) Date of publication of application: 29.01.2025
(73) Proprietor: LG Energy Solution, Ltd., Seoul 07335 (KR)
(72) Inventor: UHM, Jae Yong, Daejeon 34122 (KR)
(74) Representative: Plasseraud IP
(86) International application number: PCT/KR2023/011803
(87) International publication number: WO 2024/122795

(56) References cited:
- KR-A- 20180 130 281
- KR-A- 20180 135 604
- KR-A- 20190 001 409
- KR-A- 20190 001 409
- KR-A- 20200 040 614
- KR-A- 20210 061 945
- KR-A- 20220 025 418
- US-A1- 2016 226 043
- US-A1- 2020 035 980
- US-A1- 2020 075 913

## Description

### [TECHNICAL FIELD]

### Cross Citation with Related Application(s)

This application claims the benefit of Korean Patent Application No. 10-2022-0167843 filed on December 5, 2022 in the Korean Intellectual Property Office.

The present disclosure relates to a battery module and a battery pack including the same, and more particularly, to a battery module having a novel connection configuration of electrode leads and busbars, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU(Battery Disconnect Unit), a BMS(Battery Management System), and a cooling system to form a battery pack.

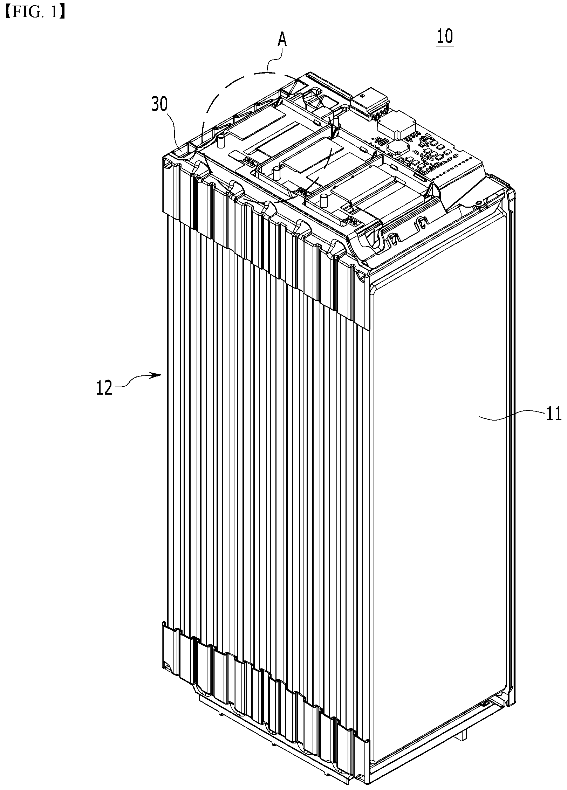

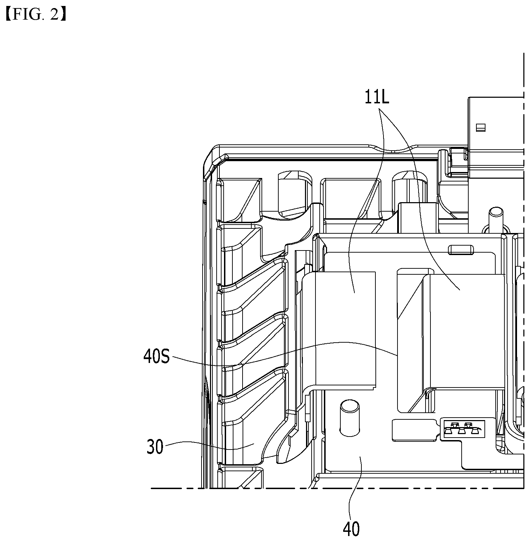

A conventional battery module may utilize a busbar and a busbar frame for providing electrical connection between multiple battery cells. The structure of the busbar and busbar frame used in a conventional battery module will be described below with reference to FIGS. 1 and 2.

FIG. 1 is a perspective view showing a conventional battery module. FIG. 2 is a partial view which enlarges and shows a section of "A" in FIG. 1. In particular, FIG. 1 shows the state in which the battery module is erected to show the appearance of the busbar frame and busbar.

Referring to FIGS. 1 and 2, a conventional battery module 10 includes a battery cell stack 12 in which a plurality of battery cells 11 are stacked, and busbar frames 30 disposed on both sides of the battery cell stack 12. Such a busbar frame 30 may be mounted with a busbar 40.

The busbar 40 is for providing electrical connection between the plurality of battery cells 11. The electrode lead 11L of the battery cell 11 passes through a slit formed in the busbar frame 30, and then can be bent and connected to the busbar 40. In some cases, the electrode lead 11L may also pass through a slit 40S formed in the busbar 40.

When connecting between the electrode lead 11L and the busbar 40, the method is not limited as long as electrical connection is available, and for example, they may be connected by welding junction. The battery cells 11 may be electrically connected in series or parallel via the busbar 40.

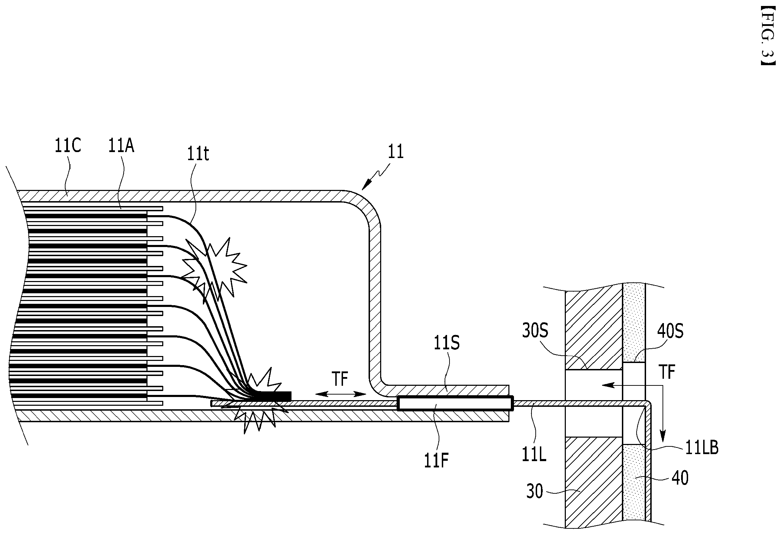

The connection configuration of the battery cells 11 as mentioned above may be broken by tensile force. This will be explained with reference to FIG. 3.

FIG. 3 is a cross-sectional view for explaining breakage of an electrode tab or breakage of a connecting portion between an electrode tab and an electrode lead in a conventional battery module.

Referring to FIG. 3, the battery cell 11 can be produced by housing the electrode assembly 11A inside a pouch-shaped cell case 11C and then sealing the outer peripheral portion of the cell case 11C to form a sealing portion 11S. The electrode assembly 11A may include electrodes and a separator disposed between the electrodes. Respective electrodes include electrode tabs 11t, wherein the electrode tabs 11t may be connected to the electrode lead 11L by a method such as welding.

The electrode lead 11L protrudes to the outside of the cell case 11C, passes through a slit 30S of the busbar frame 30 and a slit 40S of the busbar 40 as mentioned above, and then can be bent and connected to the busbar 40.

At this time, welding is performed by bringing the electrode lead 11L into close contact with the surface of the busbar 40. Although FIG. 3 shows only the case where one electrode lead 11L protruding from one battery cell 11 is joined to the busbar 40, there is also a case where a plurality of electrode leads 11L protruding from multiple battery cells 11 are joined to one busbar 40. In order to bring the electrode leads 11L into close contact with the surface of the busbar 40, the electrode leads 11L are bent to form a bent portion 11LB. Further, in order to bring multiple electrode leads 11L into close contact with the surface of the busbar 40, the length of the electrode leads 11L must be set differently for each battery cell 11. Therefore, the conventional battery module 10 essentially requires a process of cutting the electrode lead 11L and a process of bending the electrode lead 11L.

Further, in the process of bending the electrode lead 11L, a tensile force TF is generated in the electrode lead 11L. Due to this tensile force TF, stress may be concentrated on the electrode tab 11t or the connecting portion between the electrode tab 11t and the electrode lead 11L. Ultimately, in the worst cases, there may be a problem that the electrode tab 11t itself is broken or the connecting portion between the electrode tab 11t and the electrode lead 11L is broken. Since this is an important issue that can be related to the risk of fire due to internal short circuits, there is a need to develop a technology that can prevent breakage of the electrode tab or breakage of the connecting portion between the electrode tab and the electrode lead.

Document KR 2019 0001409 A discusses a battery module having improved stability by preventing overcharging of the battery module, and a battery pack and an automobile including the battery module. Document US 2020/075913 A1 discusses a battery assembly includes a battery cell terminal/busbar joint with one or more Z-shaped weld beads. Document KR 2021 0061945 A discusses a battery module having improved mechanical properties and electrical properties. Document US 2016/226043 A1 relates to a battery module including electrode leads at which a structure for damping external impact and vibration is formed.

### [DETAILED DESCRIPTION OF THE INVENTION]

### [Technical Problem]

It is an object of the present disclosure to provide a battery module having a novel connection configuration of electrode leads and busbars so as to prevent breakage of the electrode tab itself or breakage of the connecting portion between the electrode tab and the electrode lead, and a battery pack including the same.

### [Technical Solution]

The solution is defined by the appended claims.

### [Advantageous Effects]

According to embodiments of the present disclosure, the busbar is designed to include a first portion and a second portion, so that the electrode lead can be joined to the busbar without bending. Thereby, since a bending portion is not formed in the electrode lead, tensile force due to bending does not act on the electrode lead, and it is possible to prevent breakage of the electrode tab or breakage of the connecting portion between the electrode tab and the electrode lead.

Since a bending portion is not formed in the electrode lead, a process of bending the electrode lead is not necessary. Further, since respective battery cells can be located regularly from the joining portion between the electrode lead and the busbar, a process of cutting the electrode lead is also not necessary.

In addition, according to embodiments of the present disclosure, a bead portion protruding from the electrode lead can be formed. Even if a bending portion is not formed in the electrode lead, the bead portion allows stable junction between the electrode lead and the busbar.

Effects obtainable from the present disclosure may be not limited by the above mentioned effects. And, other effects not mentioned herein can be clearly understood from the description of the claims by those skilled in the art.

### [BRIEF DESCRIPTION OF THE DRAWINGS]

FIG. 1 is a perspective view showing a conventional battery module;
FIG. 2 is a partial view which enlarges and shows a section of "A" in FIG. 1;
FIG. 3 is a cross-sectional view for explaining breakage of an electrode tab or breakage of a connecting portion between an electrode tab and an electrode lead in a conventional battery module;
FIG. 4 is an exploded perspective view showing a battery module according to an embodiment of the present disclosure;
FIG. 5 is a plan view showing one of the battery cells included in the battery module of FIG. 4;
FIG. 6 is a partial view showing the battery cell stack and busbar included in the battery module of FIG. 4;
FIG. 7 is a partial view which enlarges and shows the joining portion between the electrode leads of the battery cells and the busbar in FIG. 6;
FIG. 8 is a cross-sectional view showing a cross-section taken along the cutting line B-B' of FIG. 6;
FIG. 9 is a perspective view showing a busbar according to an embodiment of the present disclosure;
FIGS. 10 and 11 are diagrams showing electrode leads of a battery cell according to an embodiment of the present disclosure, respectively;
FIGS. 12 and 13 are diagrams showing the process of joining an electrode lead and a busbar according to an embodiment of the present disclosure, respectively;
FIG. 14 is a diagram showing an electrode lead of a battery cell according to another embodiment of the present disclosure; and
FIG. 15 is a perspective view showing a busbar frame according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

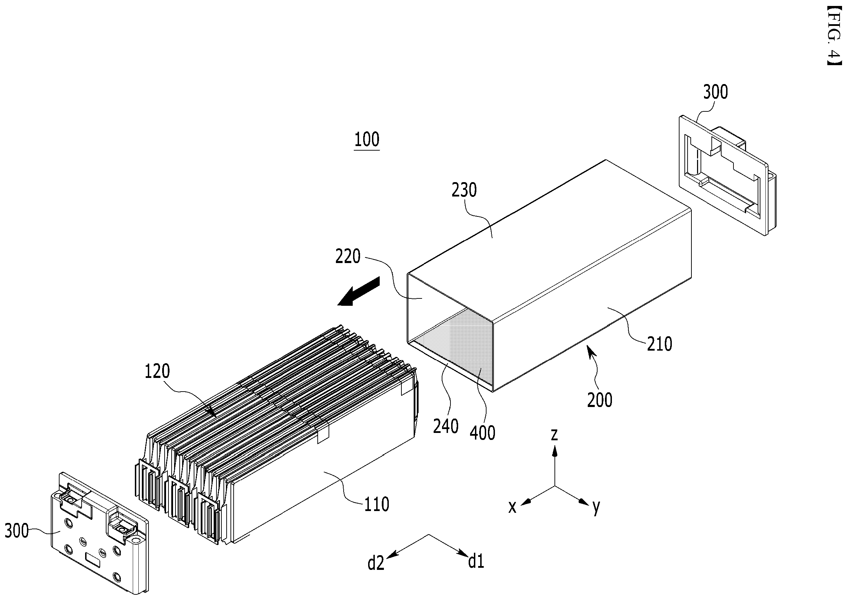

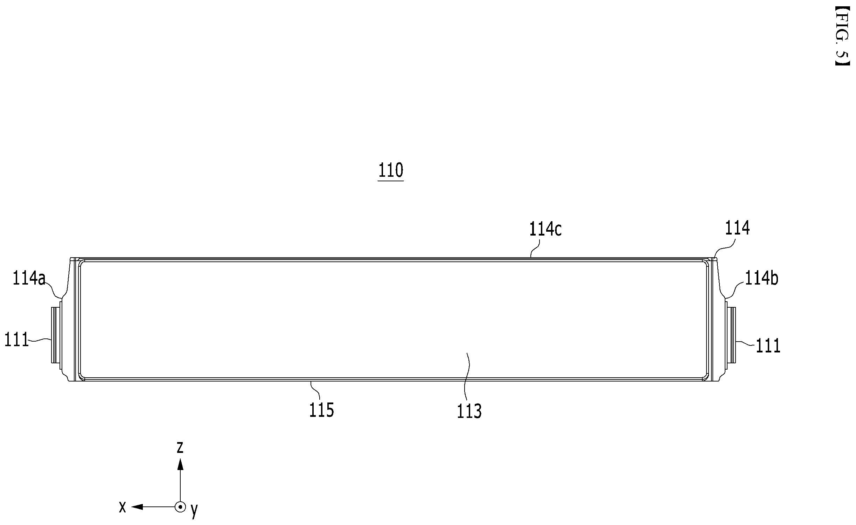

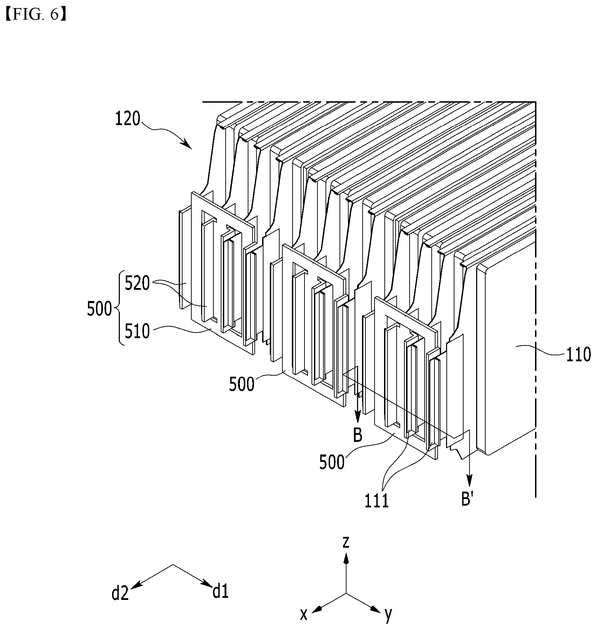

FIG. 4 is an exploded perspective view showing a battery module according to an embodiment of the present disclosure. FIG. 5 is a plan view showing one of the battery cells included in the battery module of FIG. 4. FIG. 6 is a partial view showing the battery cell stack and busbar included in the battery module of FIG. 4.

Referring to FIGS. 4 to 6, the battery module 100 according to an embodiment of the present disclosure includes a battery cell stack 120 in which battery cells 110 are stacked along a first direction d1, and at least one busbar 500 located on one side or both sides of the battery cell stack 120.

The busbar 500 is a medium for electrical connection between the electrode leads 111 of the battery cells 110, and preferably includes a metal material. Whether or not the busbar 500 is located on one side or both sides of the battery cell stack 120 is determined depending on whether the electrode lead 111 of the battery cell 110 protrudes in only one direction or whether it protrudes in both directions. Below, the battery cell 110 according to the present embodiment will be first specifically described.

The battery cell 110 may be a pouch-type battery cell, and may have a rectangular sheet shape. The battery cell 110 can be formed by housing an electrode assembly in a pouch case of a laminate sheet including a resin layer and a metal layer, and then adhering the outer peripheral part of the pouch case. Specifically, the battery cell 110 may have a structure in which two electrode leads 111 face each other and protrude from one end 114a and the other end 114b of the cell main body 113, respectively. As another embodiment, a structure in which the electrode leads 111 of the battery cells 110 all protrude in one direction is also available. One of the electrode leads 111 is a positive electrode lead, and the other is a negative electrode lead.

The battery cell 110 can be produced by joining both ends 114a and 114b of a pouch case 114 and one side part 114c connecting them in a state in which an electrode assembly (not shown) is housed in a pouch case 114. In other words, the battery cell 110 according to the present embodiment has a total of three sealing portions, the sealing portions have a structure that is sealed by a method such as fusion, and the remaining other one side part may be composed of a folding part 115. That is, the battery cell 110 according to the present embodiment may be a pouch-type battery cell configured to house an electrode assembly inside the pouch case 114 and seal the outer peripheral part of the pouch case 114.

Such battery cells 110 are stacked along the first direction d1 to form the battery cell stack 120. Specifically, in the battery cell stack 120, the battery cells 110 may be stacked along the first direction d1 in an upright state so that one-side surfaces of the battery cells 110 face each other.

At this time, the electrode leads 111 protrude from the battery cell along the second direction d2 perpendicular to the first direction d1. Thereby, the busbar 500 may be located on one side in the second direction d2 with respect to the battery cell stack 120.

In the present disclosure, the first direction d1 is shown to be the y-axis direction, and the second direction d2 is shown to be the x-axis direction.

On the other hand, if the electrode leads 111 of the battery cell 110 is configured to protrude in both directions from the battery cell 110, other electrode leads 111 can protrude in a direction opposite to the second direction d2, that is, in the -x axis direction. Thereby, other busbars 500 may also be located on one side of the battery cell stack 120 in a direction opposite to the second direction d2.

Below, the configuration of the busbar and the junction between the busbar and the electrode lead according to the present embodiment will be described in detail.

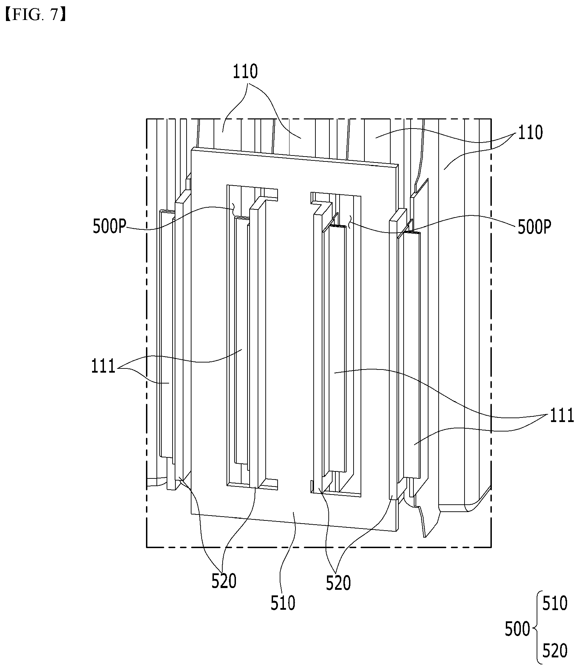

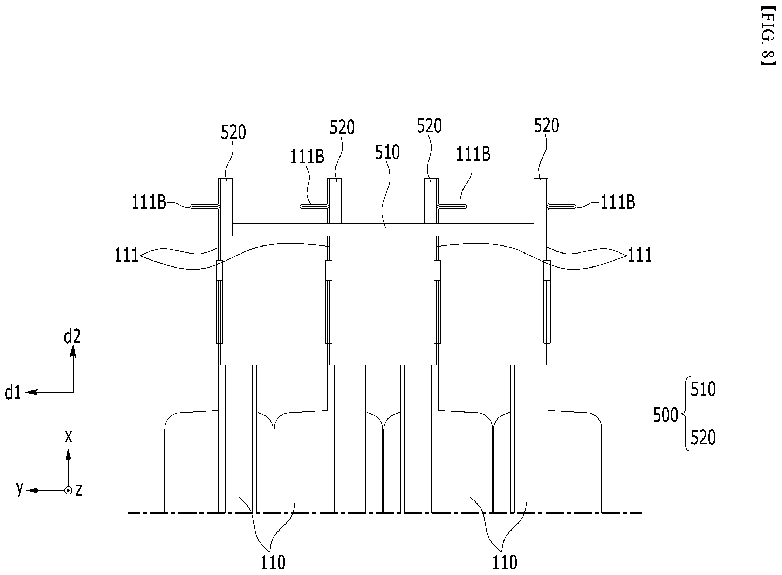

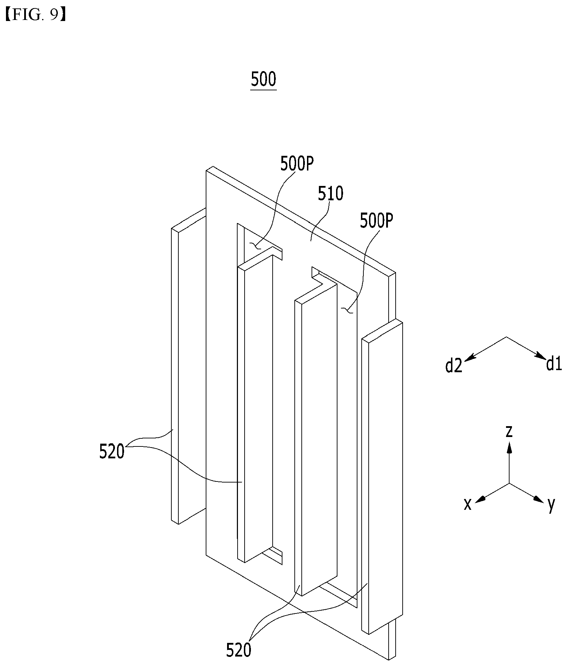

FIG. 7 is a partial view which enlarges and shows the joining portion between the electrode leads of the battery cells and the busbar in FIG. 6. FIG. 8 is a cross-sectional view showing a cross-section taken along the cutting line B-B' of FIG. 6. FIG. 9 is a perspective view showing a busbar according to an embodiment of the present disclosure.

Referring to FIGS. 6 to 9 together, the busbar 500 according to the present embodiment includes a first portion 510, and a second part 520 that extends from the first portion 510 at a constant angle with one surface of the first portion 510, wherein the electrode lead 111 of the battery cell 110 is joined to the second portion 520. As previously described, the busbar 500 is a medium for electrical connection between the battery cells 110, which is a member that is joined to the electrode lead 111 of the battery cell 110.

According to the invention, the second portion 520 may extend at an angle of 45 degrees or more and 135 degrees or less with one surface of the first portion 510. More specifically, the second portion 520 may be extended so that one surface of the second portion 520 is perpendicular to one surface of the first portion 510. In particular, one surface of the first portion 510 may be parallel to the first direction d1, and one surface of the second portion 520 may be parallel to the second direction d2. In other words, one surface of the first portion 510 may be parallel to the direction in which the battery cells 110 are stacked, and the second portion 520 may be parallel to the direction in which the electrode lead 111 protrudes from the battery cell 110.

In the present embodiment, the busbar 500 is not composed of only the first portion 510, but further includes a second portion 520 that makes a constant angle with the first portion 510, and the electrode lead 111 is joined to this second portion 520.

If the busbar consists of only the first portion, it has a structure similar to the conventional busbar 40 described in FIGS. 1 to 3. When the electrode lead 11L is joined to the busbar 40 as mentioned above, the electrode lead 11L is bent to form the bent portion 11LB in order to bring the electrode lead 11L into close contact with the surface of the busbar 40. Thereby, a process of cutting the electrode lead 11L and a process of bending the electrode lead 11L were essentially required, and breakage was generated in the electrode lead 11L due to the tensile force TF generated in the process of bending the electrode lead 11L.

On the other hand, in the case of the busbar 500 according to the present embodiment, a second portion 520 is further provided, and the electrode lead 111 is joined to this second portion 520. Therefore, in the process of joining the electrode lead 111 to the busbar 500, there is no need to bend the electrode lead 111. Since the tensile force due to bending does not act on the electrode lead 111, it is possible to prevent breakage of the electrode tab or breakage of the connecting portion between the electrode tab and the electrode lead.

Further, since the process of bending the electrode lead is not necessary and respective battery cells 110 can be located regularly from the joining portion between the electrode lead 111 and the busbar 500, the process of cutting the electrode lead 111 is also not necessary. In other words, since partial processes can be eliminated, product production costs can be reduced, and productivity can be improved.

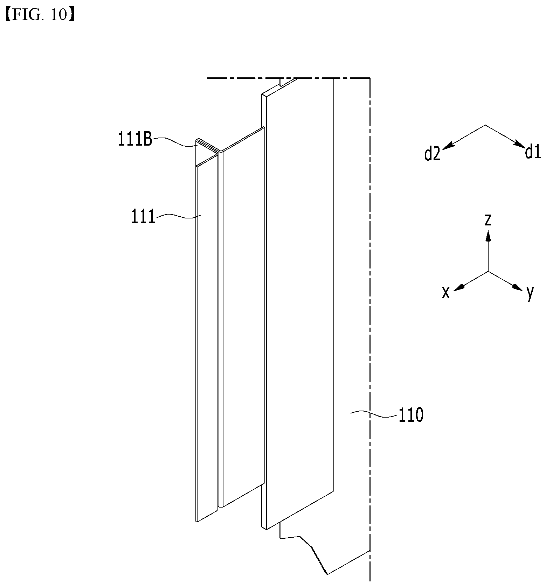

On the other hand, the joining method between the electrode lead 111 and the second portion 520 is not particularly limited as long as electrical connection between the electrode lead 111 and the second portion 520 is available. As one example, the electrode lead 111 may be welded and joined to the second portion 520. That is, the electrode lead 111 may be formed with a joining portion due to welding junction. The welding junction and the joining portion will be described again below along with FIGS. 10 to 13.

The busbar 500 according to the present embodiment may be formed with an open portion 500P, and at least one of the electrode leads 111 may be bonded to the second portion 520 while passing through the open portion 500P. In particular, the first portion 510 of the busbar 500 may be formed with an open portion 500P. Multiple second portions 520 may be provided on one busbar 500, and an open portion 500P may be provided in order to join the electrode lead 111 to the second portion 520 located on the central side rather than the outermost side. Further, the other electrode leads 111 may be joined to the second portion 520 without passing through the open portion 500P, as illustrated. In particular, some of the electrode leads 111 may be joined to the second portion 520 located on the outermost side without passing through the open portion 500P.

As described above, one busbar 500 is provided with a plurality of second portions 520, so that respective battery cells 110 may be located regularly from the joining portion between the electrode lead 111 and the busbar 500. Thereby, unlike a conventional technique, the process of cutting the electrode lead is not necessary. The open portion 500P is a portion provided for convenience of junction between some of the electrode leads 111 and the second portion 520, when multiple second portions 520 are formed on one busbar 500.

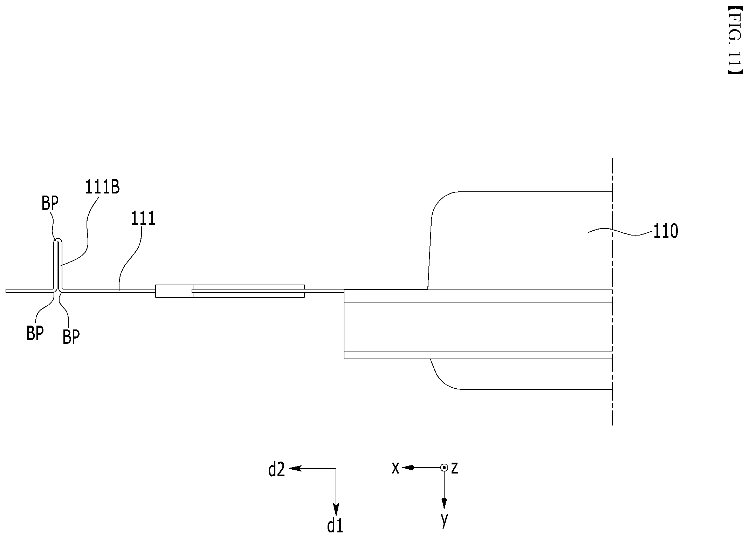

Next, the electrode lead according to this embodiment and the bead portion formed thereon will be described in detail with reference to FIGS. 10 and 11.

FIGS. 10 and 11 are diagrams showing electrode leads of a battery cell according to an embodiment of the present disclosure, respectively. Specifically, FIG. 10 is a partial perspective view of an electrode lead according to the present embodiment. FIG. 11 is a plan view of the electrode lead according to the present embodiment as viewed along the -z axis direction on the xy plane.

Referring to FIGS. 10 and 11 together with FIGS. 7 and 8, since the electrode lead 111 according to this embodiment is joined to the second portion 520 as described above, there is no need to bend perpendicular to the direction in which it protrudes from the battery cell 110.

However, the electrode lead 111 according to the invention is formed with a bead portion 111B protruding in a direction different from the second direction d2. That is, although the electrode lead 111 protrudes from the battery cell 110 along the second direction d2, it is not simply formed in a plate shape, but a bead portion 111B that protrudes in a direction different from the second direction d2 can be formed in a middle portion of the electrode lead 111. More specifically, the bead portion 111B protrudes from the middle portion of the electrode lead 111 in a direction parallel to the first direction d1.

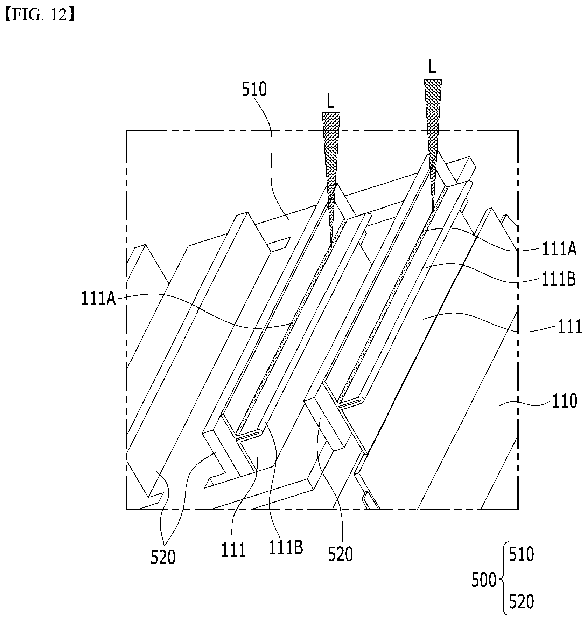

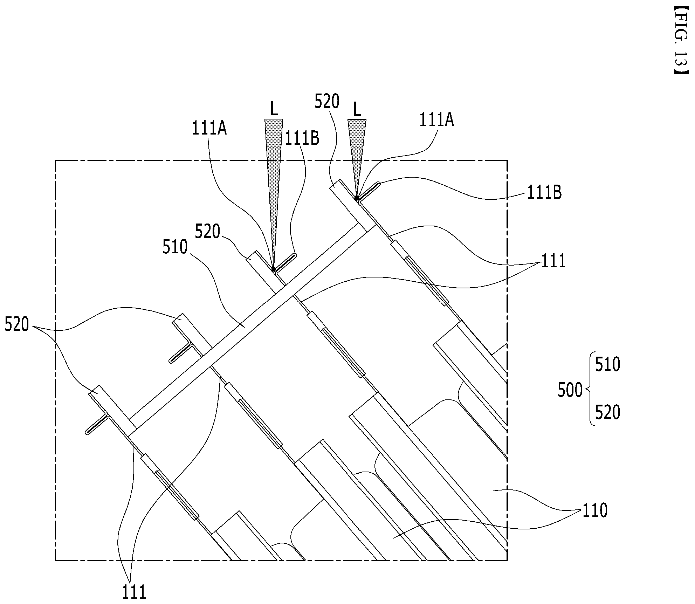

Next, the welding junction of the electrode lead 111 and the function of the bead portion 111B according to the present embodiment will be described with reference to FIGS. 12 and 13.

FIGS. 12 and 13 are diagrams showing the process of joining an electrode lead and a busbar according to an embodiment of the present disclosure, respectively.

Referring to FIGS. 12 and 13 together with FIGS. 8, 10, and 11, the electrode lead 111 may be welded and joined to the second portion 520 as previously described. The second portion 520 is provided on the busbar 500, and the electrode lead 111 does not need to be bent, but the welding process may be difficult compared to the conventional electrode lead 11L in a bent form. As shown in FIG. 3, in the conventional case, since the electrode lead 11L is bent, the portion where the electrode lead 11L and the busbar 40 are in close contact can be seen from the front, and welding is performed by irradiating the relevant portion with a laser, etc., so that the welding process is relatively simple. On the other hand, since the electrode lead 111 according to the present embodiment does not have a portion bent at a right angle, the portion where the electrode lead 111 and the second portion 520 are in close contact is not the surface seen from the front, and it may be difficult to irradiate the laser due to an angle.

In order to improve weldability and achieve a stable welding junction between the electrode lead 111 and the second portion 520, according to this embodiment, the above-mentioned bead portion 111B was formed on the electrode lead 111.

As shown in FIGS. 12 and 13, the joining portion 111A, which is a joining portion of the electrode lead 111 and the second portion 520, may be provided at a portion where the bead portion 111B is connected to the electrode lead 111. Here, the portion where the bead portion 111B is connected to the electrode lead 111 refers to the starting portion where the bead portion 111B begins to protrude from the electrode lead 111. That is, the portion where the bead portion 111B is connected to the electrode lead 111 may be joined to the second portion 520 to form a joining portion 111A.

More specifically, a portion where the bead portion 111B is connected to the electrode lead 111 to form a joining portion 111A can be irradiated with the laser L to form the joining portion 111A. The joining portion 111A can be formed by irradiating the laser L while making an angle of about 45 degrees with one surface of the second portion 520, through which the electrode lead 111 and the busbar 500 can be electrically connected. As previously explained, the portion where the electrode lead 111 and the second portion 520 are in close contact is not a surface that is seen from the front, but since the bead portion 111B is provided and the laser L inclined at a certain angle is irradiated to the portion where the bead portion 111B is connected to the electrode lead 111, a stable welding process can be achieved. That is, the bead portion 111B according to the present embodiment can be provided so as to improve the welding processability so that the electrode lead 111 protruding along the second direction d2 can be stably welded and joined to the second portion 520.

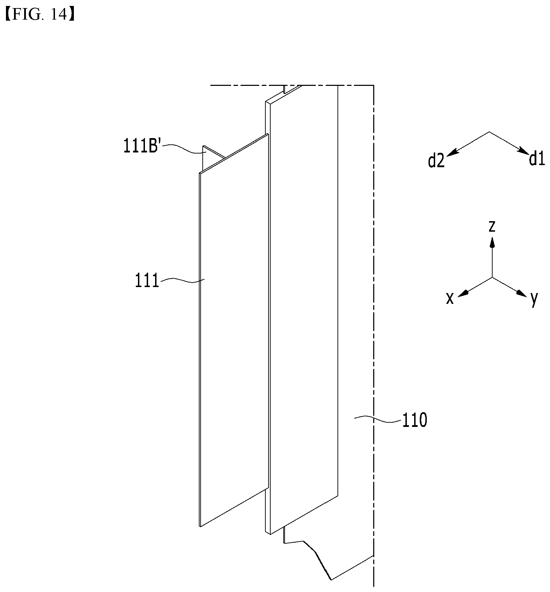

FIG. 14 is a diagram showing an electrode lead of a battery cell according to another embodiment of the present disclosure.

Referring to FIG. 14, the electrode lead 111 according to another embodiment of the present disclosure may have a bead portion 111B'. The bead portion 111B' may protrude from the middle portion of the electrode lead 111 in a direction different from the second direction d2, for example, in a direction parallel to the first direction d1. This is similar to the bead portion 111B described above. The bead portion 111B' according to the present embodiment may be formed by attaching a plate-shaped member to the middle portion of the electrode lead 111.

On the other hand, referring again to FIGS. 10 and 11, the bead portion 111B according to an embodiment of the present disclosure may be a portion formed by bending the electrode lead 111 at least three times. FIG. 11 shows a case in which three bending portions BP are formed in the electrode lead 111 to finally form a bead portion 111B. Unlike the bead portion 111B' to which a plate-shaped member is attached, the bead portion 111B according to the present embodiment can be formed by simply bending the electrode lead 111 multiple times, and thus, it has the advantage that the production method is simple. That is, the bead portions 111B and 111B' in the present disclosure is not particularly limited in their configuration as long as they protrude from the electrode lead 111 in a direction different from the second direction d2, but when considering the convenience of the production method, the bead portion 111B formed by bending the electrode lead 111 at least three times may be preferable.

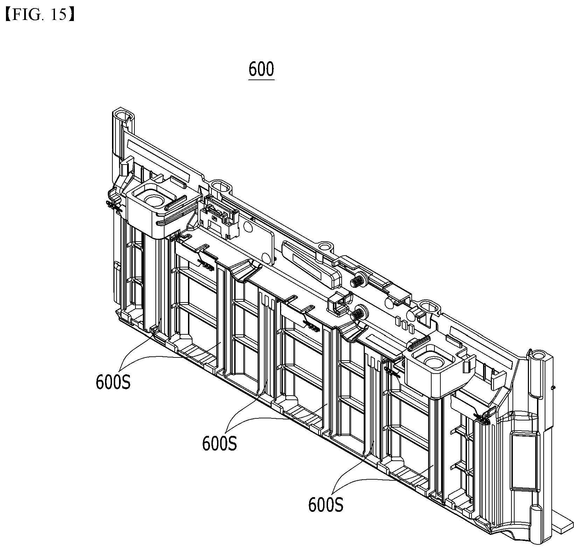

FIG. 15 is a perspective view showing a busbar frame according to an embodiment of the present disclosure.

Referring to FIGS. 6 and 15 together, the battery module according to the present embodiment may further include a busbar frame 600. In FIG. 6, only the busbar 500 is shown for convenience of explanation, but the busbar frame 600 may be located between the battery cell stack 120 and the busbar 500. The busbar 500 can be mounted on such a busbar frame 600.

Specifically, the busbars 500 are mounted on one surface of the busbar frame 600, and the battery cell stack 120 may be located on the other surface of the busbar frame 600. The electrode leads 111 of the battery cell 110 passes through a slit 600S formed in the busbar frame 600, and can be joined to the busbar 500. The junction between the electrode lead 111 and the busbar 500 has been described previously, and therefore, a description thereof will be omitted.

The busbar frame 600 may include an electrically insulating material. As one example, the busbar frame 600 may include a plastic material that is electrically insulating. The busbar frame 600 is a member disposed to prevent a short circuit from occurring when a portion of the battery cells 110 other than the electrode lead 111 is joined to the busbar 500.

Although not specifically shown, the busbar frame 600 may be mounted with a terminal busbar that functions as an external input/output terminal and a sensing assembly that transmits temperature and voltage information of the battery cell.

On the other hand, referring again to FIG. 4, the battery module 100 according to the present embodiment may further include a module frame 200 in which the battery cell stack 120 is housed. The module frame 200 is a member that houses the battery cell stack 120 therein, and may include two side surface portions 210 and 220, an upper surface portion 230, and a lower surface portion 240. Further, the module frame 200 may have a configuration in which both sides corresponding to the second direction and the opposite direction are open. The battery cell stack 120 can be housed through either of the two open sides. The module frame 200 may include a metal material having a predetermined strength in order to protect internal electrical components.

The module frame 200 shown in FIG. 4 may be a mono frame in which two side surface portions 210 and 220, an upper surface portion 230, and a lower surface portion 240 are integrated. That is, it may be produced by extrusion molding, and can have a configuration in which the two side surface portions 210 and 220, the upper surface portion 230, and the lower surface portion 240 are integrated. Although not specifically shown, in another embodiment of the present disclosure, a module frame in which the U-shaped frame and upper plate are welded together is also available. Looking at the stacking direction of the module frame 200 and the battery cells 110, the battery cells 110 may be stacked from one side surface portion 210 to the other side surface portion 220 so that one surface of the battery cells 110 is parallel to one surface of the side surface portions 210 and 220 of the module frame 200.

On the other hand, the battery module 100 according to the present embodiment may further comprise end plates 300 located on both open sides of the module frame 200. The end plates 300 may be located so as to cover the battery cell stack 120 on both open sides of the module frame 200. The edges of respective end plates 300 may be joined to the corresponding edges of the module frame 200 by a welding method. The end plates 300 may include a metal material having a predetermined strength, and may protect the battery cell stack 120 and other electrical components from external impact. The busbar 500 and busbar frame 600 described above may be located between the end plate 300 and the battery cell stack 120.

The battery module 100 may further comprise a thermal resin layer 400 located between the battery cell stack 120 and the lower surface portion 240 of the module frame 200. One side of the battery cells 110 may be adhered to the thermal resin layer 400. Specifically, the thermal resin layer 400 may be formed by injecting or applying a thermal resin and then curing it. The thermal resin may include a thermally conductive adhesive material, and specifically may include at least one of a silicone material, a urethane material, or an acrylic material. The thermal resin can be in a liquid phase during application, but can be cured after application to be adhered to one side of the battery cell 110. Thereby, the thermal resin layer 400 may serve to fix the battery cells 110. In addition, the thermal resin layer 400 has excellent heat conduction properties, and can quickly transfer heat generated in the battery cell 110 to the lower side of the battery module.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System), and can be applied to various devices capable of using a secondary battery, without being limited thereto.

### [Description of Reference Numerals]

100: battery module
110: battery cell
111: electrode lead
111A: joining portion
111B: bead portion
120: battery cell stack
200: module frame
300: end plate
400: thermal resin layer
500: busbar
510: first portion
520: second portion
600: busbar frame

## Claims

1. A battery module (100) comprising:
a battery cell stack (120) in which battery cells (110) are stacked along a first direction (d1); and
at least one busbar (500) located on one side or both sides of the battery cell stack (120),
wherein an electrode lead (111) protrudes from the battery cell (110) along a second direction (d2) perpendicular to the first direction (d1),
wherein the busbar (500) comprises a first portion (510), and a second portion (520) that extends from the first portion (510) at an angle of 45 degrees or more and 135 degrees or less with one surface of the first portion (510),
wherein the electrode lead (111) is joined to the second portion (520), and
wherein the electrode lead (111) is formed with a bead portion (111B; 111B') protruding from a middle portion of the electrode lead (111) in a direction parallel to the first direction (d1).

2. The battery module (100) as claimed in claim 1, wherein:
the battery cell (110) is a pouch-type battery cell, and
in the battery cell stack (120), the battery cells (110) are stacked in an upright state so that one-side surfaces of the battery cells (110) faces each other.

3. The battery module (100) as claimed in claim 1, wherein:
the second portion (520) extends so that one surface of the second portion (520) is perpendicular to one surface of the first portion (510).

4. The battery module (100) as claimed in claim 1, wherein:
one surface of the first portion (510) is parallel to the first direction (d1), and one surface of the second portion (520) is parallel to the second direction (d2).

5. The battery module (100) as claimed in claim 1, wherein:
the electrode lead (111) is welded and joined to the second portion (520).

6. The battery module (100) as claimed in claim 1, wherein:
the busbar (500) is formed with an open portion (500P), and
at least one of the electrode leads (111) is joined to the second portion (520) while passing through the open portion (500P).

7. The battery module (100) as claimed in claim 1,
further comprising a busbar frame (600) located between the battery cell stack (120) and the busbar, and the busbar (500) is mounted on the busbar frame (600),
wherein the busbar frame (600) is formed with a slit (600S), and
wherein the electrode lead (111) passes through the slit (600S) and is joined to the second portion (520) of the busbar (500).

8. The battery module (100) as claimed in claim 1, wherein:
the bead portion (111B) is a portion formed by bending the electrode lead (111) at least three times.

9. The battery module (100) as claimed in claim 1, wherein:
a joining portion (111A), which is a portion where the electrode lead (111) and the second portion (520) are joined, is provided at a portion where the bead portion (111B) is connected to the electrode lead (111).

10. The battery module (100) as claimed in claim 9, wherein:
the portion where the bead portion (111B) is connected to the electrode lead (111) is irradiated with a laser (L) to form the joining portion (111A).

11. The battery module (100) as claimed in claim 1,
further comprising a module frame (200) in which the battery cell stack (120) is housed.

12. A battery pack comprising the battery module (100) as claimed in claim 1.

## Patentansprüche

1. Batteriemodul (100), umfassend:
• einen Batteriezellenstapel (120), in dem Batteriezellen (110) entlang einer ersten Richtung (d1) gestapelt sind; und
• mindestens eine Sammelschiene (500), die sich auf einer Seite oder auf beiden Seiten des Batteriezellenstapels (120) befindet,
wobei eine Elektrodenleitung (111) aus der Batteriezelle (110) entlang einer zweiten Richtung (d2) senkrecht zur ersten Richtung (d1) herausragt,
wobei die Sammelschiene (500) einen ersten Abschnitt (510) und einen zweiten Abschnitt (520) umfasst, der sich von dem ersten Abschnitt (510) in einem Winkel von 45 Grad oder mehr und 135 Grad oder weniger zu einer Oberfläche des ersten Abschnitts (510) erstreckt,
wobei die Elektrodenleitung (111) mit dem zweiten Abschnitt (520) verbunden ist, und
wobei die Elektrodenleitung (111) mit einem Wulstabschnitt (111B; 111B') ausgebildet ist, der von einem mittleren Abschnitt der Elektrodenleitung (111) in einer Richtung parallel zur ersten Richtung (d1) herausragt.

2. Batteriemodul (100) nach Anspruch 1, wobei:
• die Batteriezelle (110) eine beutelförmige Batteriezelle ist, und
• in dem Batteriezellenstapel (120) die Batteriezellen (110) in einem aufrechten Zustand gestapelt sind, so dass einseitige Oberflächen der Batteriezellen (110) einander zugewandt sind.

3. Batteriemodul (100) nach Anspruch 1, wobei:
der zweite Abschnitt (520) sich so erstreckt, dass eine Oberfläche des zweiten Abschnitts (520) senkrecht zu einer Oberfläche des ersten Abschnitts (510) steht.

4. Batteriemodul (100) nach Anspruch 1, wobei:
eine Oberfläche des ersten Abschnitts (510) parallel zur ersten Richtung (d1) verläuft, und eine Oberfläche des zweiten Abschnitts (520) parallel zur zweiten Richtung (d2) verläuft.

5. Batteriemodul (100) nach Anspruch 1, wobei:
die Elektrodenleitung (111) mit dem zweiten Abschnitt (520) verschweißt und verbunden ist.

6. Batteriemodul (100) nach Anspruch 1, wobei:
die Sammelschiene (500) mit einem offenen Abschnitt (500P) ausgebildet ist, und mindestens eine der Elektrodenleitungen (111) mit dem zweiten Abschnitt (520) verbunden ist, während sie durch den offenen Abschnitt (500P) hindurchgeht.

7. Batteriemodul (100) nach Anspruch 1, ferner umfassend einen Sammelschienenrahmen (600), der sich zwischen dem Batteriezellenstapel (120) und der Sammelschiene befindet, wobei die Sammelschiene (500) auf dem Sammelschienenrahmen (600) montiert ist,
wobei der Sammelschienenrahmen (600) mit einem Schlitz (600S) ausgebildet ist, und wobei die Elektrodenleitung (111) durch den Schlitz (600S) hindurchgeht und mit dem zweiten Abschnitt (520) der Sammelschiene (500) verbunden ist.

8. Batteriemodul (100) nach Anspruch 1, wobei:
der Wulstabschnitt (111B) ein Abschnitt ist, der durch mindestens dreimaliges Biegen der Elektrodenleitung (111) gebildet wird.

9. Batteriemodul (100) nach Anspruch 1, wobei:
ein Verbindungsabschnitt (111A), der ein Abschnitt ist, an dem die Elektrodenleitung (111) und der zweite Abschnitt (520) verbunden sind, an einem Abschnitt vorgesehen ist, an dem der Wulstabschnitt (111B) mit der Elektrodenleitung (111) verbunden ist.

10. Batteriemodul (100) nach Anspruch 9, wobei:
der Abschnitt, an dem der Wulstabschnitt (111B) mit der Elektrodenleitung (111) verbunden ist, mit einem Laser (L) bestrahlt wird, um den Verbindungsabschnitt (111A) zu bilden.

11. Batteriemodul (100) nach Anspruch 1, ferner umfassend einen Modulrahmen (200), in dem der Batteriezellenstapel (120) untergebracht ist.

12. Batteriepack, umfassend das Batteriemodul (100) nach Anspruch 1.

## Revendications

1. Module de batterie (100) comprenant :
• un empilement de cellules de batterie (120) dans lequel des cellules de batterie (110) sont empilées le long d'une première direction (d1) ; et
• au moins une barre omnibus (500) située sur un côté ou sur les deux côtés de l'empilement de cellules de batterie (120),
dans lequel un conducteur d'électrode (111) fait saillie depuis la cellule de batterie (110) le long d'une deuxième direction (d2) perpendiculaire à la première direction (d1), dans lequel la barre omnibus (500) comprend une première partie (510), et une deuxième partie (520) qui s'étend depuis la première partie (510) selon un angle de 45 degrés ou plus et de 135 degrés ou moins avec une surface de la première partie (510),
dans lequel le conducteur d'électrode (111) est joint à la deuxième partie (520), et
dans lequel le conducteur d'électrode (111) est formé avec une partie formant cordon (111B ; 111B') faisant saillie depuis une partie médiane du conducteur d'électrode (111) dans une direction parallèle à la première direction (d1).

2. Module de batterie (100) selon la revendication 1, dans lequel :
• la cellule de batterie (110) est une cellule de batterie de type poche, et
• dans l'empilement de cellules de batterie (120), les cellules de batterie (110) sont empilées dans un état vertical de sorte que des surfaces d'un côté des cellules de batterie (110) se fassent face.

3. Module de batterie (100) selon la revendication 1, dans lequel :
la deuxième partie (520) s'étend de sorte qu'une surface de la deuxième partie (520) soit perpendiculaire à une surface de la première partie (510).

4. Module de batterie (100) selon la revendication 1, dans lequel :
une surface de la première partie (510) est parallèle à la première direction (d1), et une surface de la deuxième partie (520) est parallèle à la deuxième direction (d2).

5. Module de batterie (100) selon la revendication 1, dans lequel :
le conducteur d'électrode (111) est soudé et joint à la deuxième partie (520).

6. Module de batterie (100) selon la revendication 1, dans lequel :
la barre omnibus (500) est formée avec une partie ouverte (500P), et au moins l'un des conducteurs d'électrode (111) est joint à la deuxième partie (520) tout en passant à travers la partie ouverte (500P).

7. Module de batterie (100) selon la revendication 1, comprenant en outre un cadre de barre omnibus (600) situé entre l'empilement de cellules de batterie (120) et la barre omnibus, et la barre omnibus (500) est montée sur le cadre de barre omnibus (600),
dans lequel le cadre de barre omnibus (600) est formé avec une fente (600S), et
dans lequel le conducteur d'électrode (111) passe à travers la fente (600S) et est joint à la deuxième partie (520) de la barre omnibus (500).

8. Module de batterie (100) selon la revendication 1, dans lequel :
la partie formant cordon (111B) est une partie formée en pliant le conducteur d'électrode (111) au moins trois fois.

9. Module de batterie (100) selon la revendication 1, dans lequel :
une partie de jonction (111A), qui est une partie où le conducteur d'électrode (111) et la deuxième partie (520) sont joints, est prévue au niveau d'une partie où la partie formant cordon (111B) est reliée au conducteur d'électrode (111).

10. Module de batterie (100) selon la revendication 9, dans lequel :
la partie où la partie formant cordon (111B) est reliée au conducteur d'électrode (111) est irradiée par un laser (L) pour former la partie de jonction (111A).

11. Module de batterie (100) selon la revendication 1, comprenant en outre un cadre de module (200) dans lequel l'empilement de cellules de batterie (120) est logé.

12. Bloc-batterie comprenant le module de batterie (100) selon la revendication 1.
